# EUROPEAN PATENT APPLICATION

(11) **EP 4 840 644 A1**
(43) Date of publication of application: **18.11.2026**
(21) Application number: 25175851.2
(22) Date of filing: 12.05.2025
(51) Int. Cl.: B41J 11/00

(54) **PRINTER WITH RADIATION CURING UNIT**

(71) Applicant: CANON KABUSHIKI KAISHA, Tokyo 146-8501 (JP)
(72) Inventor: VAN KEMPEN, Kobus D., Venlo (NL); THEUNISSEN, Fredericus P.H., Venlo (NL); VAN BOMMEL, Ton A.J.J., Venlo (NL)
(74) Representative: Canon Production Printing IP Department

(57) **Abstract**

A printer having a curing unit (16) that is movable relative to a print medium (10) on which an image has been printed, the curing unit (16) comprising at least one radiation source (26, 28, 30) for irradiating the print medium (10) with curing radiation, and a nozzle (38) for blowing a gaseous cooling medium against the print medium (10), characterized in that the nozzle (38) is constituted by a bar member (34) that extends across the print medium (10) and is integrated with a mirror (22, 24) for deflecting the curing radiation onto the print medium (10).

## Description

The invention relates to a printer having a curing unit that is movable relative to a print medium on which an image has been printed, the curing unit comprising at least one radiation source for irradiating the print medium with radiation, and a nozzle for blowing a gaseous medium against the print medium.

A printer of this type has been described in WO 2017078079 A1.

US 2022379633 A1 discloses an ink jet printer wherein the curing unit comprises a plurality of light sources that are configured to irradiate the print medium with UV curing radiation at two different wavelengths. The light sources are arranged above a transport path of the print medium so as to irradiate a limited surface portion of the print medium with essentially uniform intensity.

The curing radiation induces not only a curing reaction in the ink but also increases the temperature of the ink layer and the recording medium onto which the ink layer was applied. If the temperature of the recording medium reached a threshold value, then media deformation may occur. The threshold value may depend on the type of recording medium used. The possibility of media deformation puts an upper limit to the intensity of the curing radiation.

On the other hand, the radiation dose, i.e. the total amount of radiation received, must be high enough to assure a complete curing of the ink and a sufficient robustness of the cured ink layer. The total amount of radiation may depend on the intensity profile of the radiation, the size of the area of the recording medium receiving radiation and the relative speed of the recording medium.

The conflict between these requirements can be mitigated by blowing air or another cooling medium against the part of the print medium that is being cured.

It is an object of the invention to provide a printer with a simple and easy-to-assemble design that can achieve an appropriate curing and cooling of the printed image.

According to the invention, in order to achieve this object, the nozzle is constituted by a bar member that extends across the print medium and is integrated with a mirror for deflecting the curing radiation onto the print medium.

The nozzle may extend over the entire width of the curing unit. Alternatively, the curing unit may be provided in a plurality of sections, adjacent to one another in the sub- scanning direction, each one of the plurality of sections being provided with a nozzle. The different sections may be separated from one another using a separation wall.

An air duct may be provided through which the gaseous medium can flow from one or more gaseous medium supply units to the one or more nozzles. The air duct may optionally be provided with one or more baffles.

The gaseous medium may be supplied to the nozzle using a gas supply unit. Examples of suitable gas supply units include, but are not limited to a pump, a fan, a blower, or a nitrogen generator, the nitrogen generator preferably being provided together with a compressor and/or compression vessel.

The shapes of the nozzle and the mirror are selected such that, when the bar member is installed in the correct position above the media transport path, it is assured that the gaseous medium exiting from the nozzle will hit the surface of the print medium. When the gaseous medium hits the surface, it may cool the surface. Alternatively or additionally, if the gaseous medium is an inert gas, it may decrease oxygen inhibition during curing, thereby improving curing efficiency and possibly ink layer robustness. The fact that both the nozzle and the mirror are integrated into a single component part, the bar member, facilitates not only the manufacture but also the installation of the nozzle and the mirror in the printer.

In case the radiation has a certain intensity profile, the intensity profile having a maximum, then the gaseous medium exiting from the nozzle will hit the surface of the print medium exactly at the position where the intensity of the curing radiation is maximum, so that an over-heating of the ink is reliably prevented.

More specific optional features of the invention are indicated in the dependent claims.

In an embodiment, the gaseous medium is a gaseous cooling medium. The gaseous cooling medium may effectively cool the recording medium and the ink deposited thereon. The gaseous cooling medium may be air. Air is advantageous in view of its low costs. Alternatively, the gaseous cooling medium may be selected from nitrogen, carbon dioxide, or one or more noble gases, or mixtures thereof. The advantage of these gaseous media is that they prevent oxygen inhibition, which may improve curing efficiency.

Optionally, the gaseous medium may be air enriched with at least one of nitrogen, carbon dioxide or one or more noble gases.

When the printer has a scanning-type print head which travels across the print medium in a direction transverse to the transport direction of the medium, the curing unit may be arranged either for direct curing or post-curing. In the case of direct curing, the radiation source is ranged to irradiate a portion of the surface of the print medium that is located in the path of travel of the print head, so that curing may set-in already as soon as the ink has been deposited on the print medium and the print head has traveled a sufficient distance in the transverse direction so that the newly printed part of the image is exposed to the radiation. In the case of post-curing, the curing unit is arranged downstream, in the sub-scanning direction, of the path of travel of the print head so that curing does not begin before an entire swath of the image has been printed and the print medium has been advanced and the newly printed part of the image passes underneath the curing unit.

During printing, the intensity of the radiation may be controlled to ensure the ink layer on the recording medium receives a sufficient dose of radiation, also taking into account the speed in the sub-scanning direction. The speed in the sub-scanning direction may depend on the print strategy used and the number of passed of the print unit. Print strategies involving fewer passes may require high intensity of radiation, wherein print strategies involving a high number of passes may only require a low intensity of radiation.

In an embodiment, a lip is formed at a lower end of the nozzle. The lip may be formed by a wall of the nozzle. The lip may be inclined at an angle in the range of from 35° - 60°, preferably in the range of from 40° - 50°.

The gas exiting from the nozzle 38 is blown against the recording medium, preferably at the position of the recording medium at which the intensity of radiation is highest, as this will maximize the cooling effect.

In case the lip is inclined, the gas exiting the nozzle may not disrupt the droplets forming the ink layer. If the ink layer would be disrupted, this could result in unwanted decrease in image quality. Hence, providing a lip that is inclined may prevent unwanted decrease in image quality.

In one embodiment of the invention, that is particularly suitable for post-curing, the curing unit includes an optical system that is arranged to create, on the surface of the print medium, an intensity profile I(x). When the print medium is moved relative to the curing unit with a certain velocity v, which may be constant or not, the spatial intensity profile I(x) translates into an intensity- time-profile I(t) = I(x(t)).

In an embodiment, the intensity profile I(x) may be the intensity profile according to copending application EP25175174.9 (application No.). When a given volume element of the ink layer reaches the region that is irradiated by the curing unit, it will first hit the peak of the intensity profile. However, since the peak is relatively narrow, the time during which the ink volume element traverses the peak may be so short that the radiation dose is not sufficient for fully curing the ink. Further curing may occur while the volume element traverses the lower-intensity region where the intensity is so low that the recording medium is not deformed due to excessive heating. As a result, the ink may be fully cured with a sufficient radiation dose. In this way, a fully cured and robust ink layer is obtained on a relatively short distance of travel of the print medium while avoiding media deformation.

In an embodiment, the curing unit may comprise a plurality of radiation sources configured to emit UV radiation at different wavelengths. The radiation component with the shortest wavelength will tend to be absorbed quickly in the ink and will therefore mainly effect a fast curing of the surface layer of the ink. This has the advantage that the ink has less time to react with oxygen in the ambient air before being fully cured. The radiation components with larger wavelengths will penetrate deeper into the ink layer and will therefore cause curing in the depth of the layer.

In an embodiment, the intensity profile may be selected differently for the different wavelengths. In particular, the profile having a peak and an adjacent lower-intensity region may be selected for the short-wavelength component, while the other wavelength components may have a more symmetric and flatter intensity profile. The short wavelength may not penetrate deep into the ink layer and may mainly result incurring at the surface of the ink layer, the radiation having a longer wavelength may penetrate into the ink layer and may result in proper curing over the entire thickness of the ink layer.

In an embodiment, the optical system may comprise a curved mirror, in which case the curved mirror will at the same time define a suitable taper of the nozzle. The curvature of the mirror has an impact on the shape of the intensity profile. At least a part of the radiation emitted by the radiation source may be focused onto a point that is offset from the surface of the print medium. The intensity profile my then be caused to form a narrow peak by focusing the radiation onto a point that is close to the surface of the print medium.

In a further embodiment, in order to obtain a distinctively asymmetric intensity profile, a part of the radiation that is focused by the curved mirror may be reflected at a secondary mirror (which will define a straight portion of the nozzle) so as to create a caustic at one end of the irradiated area.

If the curing unit comprises a plurality of radiation sources emitting light at different wavelengths, the intensity profile of the different wavelength components may be controlled by suitably positioning the light sources relative to the curved mirror. For example, the light sources may be arranged along a vertical line so as to emit the light towards the curved mirror in an essentially horizontal direction, and the curvature of the mirror may vary over the height, so that the light from the different light sources will be focused differently.

In one embodiment, the curing unit may move relative to the print medium at a constant speed. If the printer has a page-wide printhead, the printhead and the curing unit may be stationary and the print medium may be moved at constant speed relative to the printhead and the curing unit. In a printer in which the printhead is moved in a main scanning direction so as to print successive swathes of the image, the print medium will be advanced step-wise. In that case, the curing unit may be moved back and forth in the sub-scanning direction such that the average velocity is zero and the velocity relative to the print medium is always constant.

Embodiment examples will now be described in conjunction with the drawings, wherein:
- Fig. 1: is a side view of an ink jet printer according to an embodiment of the invention;
- Fig. 2: is a diagram showing the relation between a transport speed of a print medium and a speed of a curing unit in the printer shown in Fig. 1;
- Fig. 3: is the same side view as Fig. 1, but illustrating a radiation pattern for a different light source; and
- Fig. 4: shows a rear view of a curing unit as seen in the direction of arrows V - V in Fig. 1.

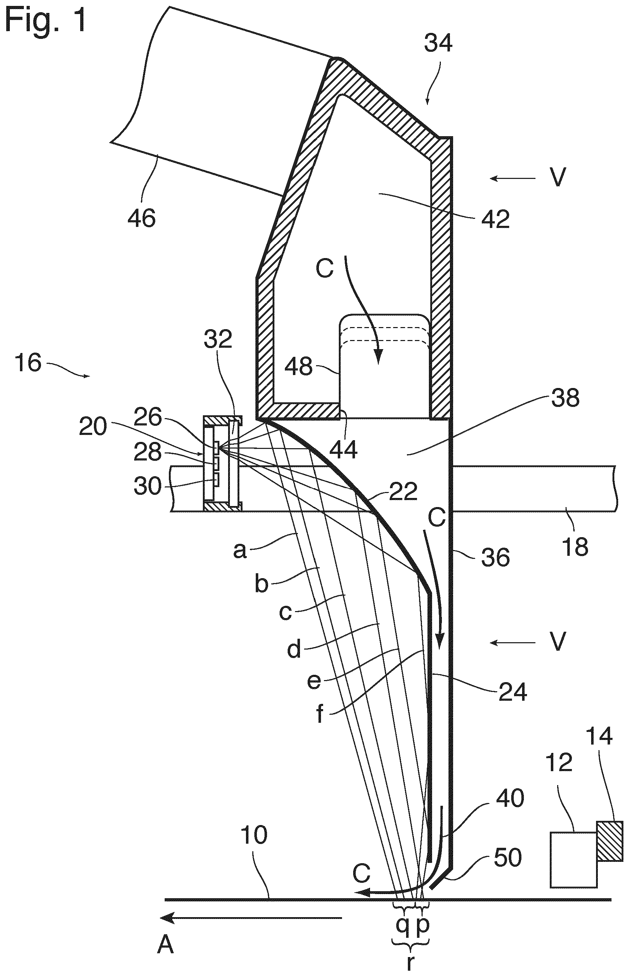

In the printer shown in Fig. 1, a print medium 10 is moved step-wise in a sub-scanning direction A past an ink jet print head 12 which prints an image onto the surface of the print medium 10 by applying a layer of a gelling-type ink onto the print medium. The printhead 12 is moved reciprocatingly along a gantry 14 in a main scanning direction that is normal to the plane of the drawing in Fig. 1. Thus, in each pass in the main scanning direction, the printhead 12 prints a swath of an image onto the print medium, whereafter the print medium 10 is advanced, so that the print head may continue printing the image in the next pass of the print head.

A curing unit 16 is arranged to be movable back and forth along guide rails 18 (only one of which has been shown) extending in a direction parallel to the sub-scanning direction A.

The curing unit 16 comprises a radiation source array 20, a curved primary mirror 22, and a flat secondary mirror 24. It will be understood that these components of the curing unit 16 extend over the entire width of the print medium 10.

In the example shown, the radiation source array 20 has three lines of radiation sources (LEDs) 26, 28, 30 that are vertically offset from one another and emit UV-light of different wavelengths in an essentially horizontal direction towards the primary mirror 22. For example, the topmost radiation sources 26 and the radiation sources 28 in the next lower line may emit light with a wavelength of 380-395nm, whereas the radiation sources 30 in the bottom line emit light with a longer wavelength of 400-410nm.

Fig. 1 illustrates the propagation of light that is emitted by the short-wavelength radiation sources 26. Each LED emits light rays "a" - "f" that traverse a transparent plate 32 and then propagate towards the primary mirror 22. Light ray "a", which is emitted slightly upwardly, is deflected at the primary mirror 22 and hits the surface of the print medium 10 at a downstream end of an irradiated region r (downstream in the direction A of advance of the print medium). Light rays "b" to "d" are also deflected at the curved mirror 22 and hit the print medium 10 in positions progressively offset in the direction-A.

Due to the curvature of the primary mirror 22, the light rays "a" and "b" are focused onto a focal point (not shown) that is somewhat below the plane of the print medium 10. However, since the curvature of the mirror 22 decreases towards the lower end, the focal point for light rays "c" and "d", that are emitted in a horizontal or even downward direction, is in a lower position so that the points where these rays impinge on the print medium 10 are distributed over a larger region. Light rays "e" and "f" which are emitted downwardly at a larger angle are also deflected at the primary mirror 22 but do not hit the print medium 10 directly. Instead, they are reflected a second time at the flat secondary mirror 24 and hit the print medium 10 essentially in the same positions as the light rays "c" and "d". Since the light rays that are deflected at the secondary mirror 24 are superposed with light rays that are only deflected at the primary mirror 22, a caustic, i.e. a line-shaped region with high intensity, is formed on the print medium 10 at an upstream end of the irradiated r area. In an intensity profile taken in the sub-scanning direction A, these superposed light rays form an intensity peak p. At the downstream end of the irradiated area r (where the rays "b" and c impinge), the intensity of the radiation is lower because the rays deflected at the secondary mirror 24 do not reach this region. Here, the intensity profile has a low-intensity region q.

The curved primary mirror 22 and the straight secondary mirror 24 are formed on or constituted by a wall of a bar member 34 that extends over the entire width of the media transport path. Together with a rear wall 36 of the bar member 34, the mirrors 22 and 24 define a nozzle 38 that has a tapering upstream portion 38 formed between the curved mirror 22 and the wall 36, and a straight vertical downstream portion 40 formed between the secondary mirror 24 and the wall 36.

A top portion of the bar member 34 forms a plenum chamber 42 that also extends over the entire width of the media transport path and opens out into the nozzle 38 via a slot 44. One end of the plenum chamber 42 is connected to a supply line 46 via which a cooling medium (ambient air or cooled air) is supplied into the plenum chamber. A number of baffles 48 divide the slot 44 into a number of successive sections. The heights of the baffles 48 are staggered such that an essentially uniform air flow is achieved in all sections of the slot 48 and, accordingly, on the entire width of the nozzle 38. The flow of cooling medium has been symbolized by arrows C.

At the lower (outlet) end of the nozzle 38, the wall 36 forms a lip 50 that is inclined at an angle of approximately 45°, so that the air exiting from the nozzle 38 is blown against the peak p in the irradiated region r, where the cooling effect will be maximum. Due to the inclination of the air stream, the air will flow over the surface of the freshly printed image in the direction A and will therefore also cool the rest of the irradiated region r and a region downstream thereof. In this way, the cooling effect achieved by the cooling medium exiting from the nozzle 38 will match the intensity profile of the curing radiation as determined by the mirrors 22 and 24.

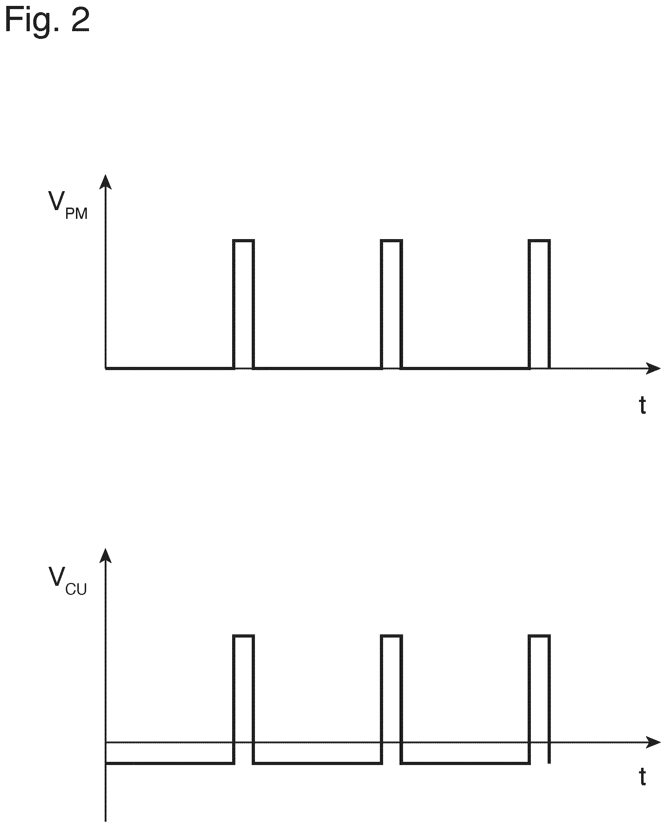

Fig. 2 shows the velocity V_{PM} of the print medium 10 relative to the gantry 14, and the velocity V_{CU} of the curing unit 16 relative to the gantry 14 as functions of the time t. While the print medium 10 is advanced step-wise, so that its velocity is 0 in the intervals between the steps, the curing unit 16 is slowly moved in the opposite direction (V_{CU} is negative) in the intervals between the steps. When the print medium is advanced during a step, the curing unit 16 is moved in forward direction such that the difference V_{CU} - V_{PM} is negative and constant. In other words, the curing unit 16 is moved relative to the print medium 10 at a constant speed. Thus, when the curing unit 16 moves to the right in Fig. 1 (relative to the print medium 10), it reaches any point on the print medium 10 first with the peak p where the intensity is high, so that the ink will be cured quickly and the temperature will increase, but will not exceed a threshold temperature above which media deformation may occur. Then, the low intensity region q will pass over that point, so that the ink will be cured further while, because of the low intensity, the temperature does not increase further. In the entire irradiated region r, the air flow from the nozzle 38 will reliably prevent an over-heating of the print medium 10.

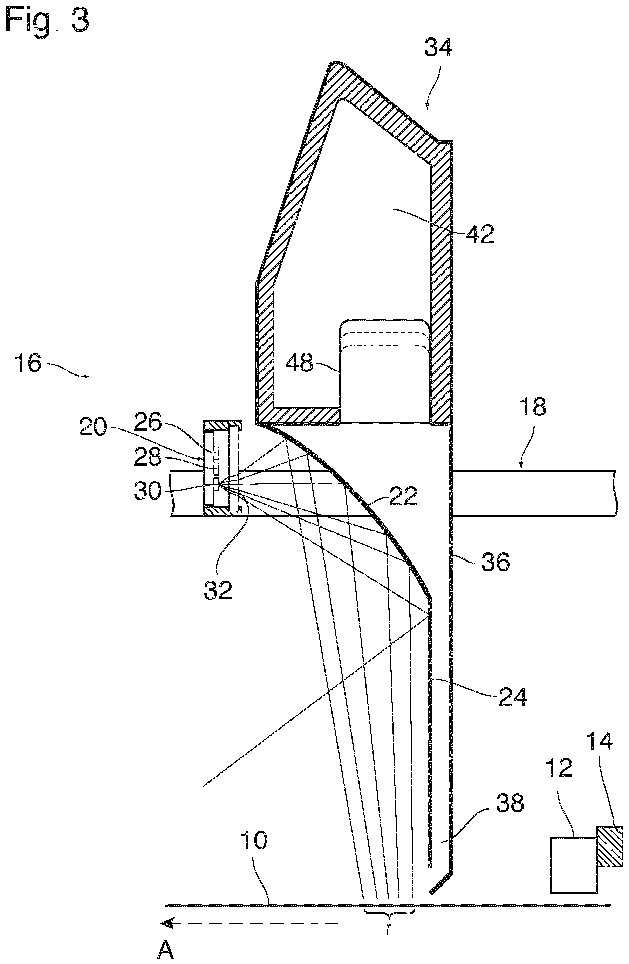

Fig. 3 illustrates the propagation of light that is emitted by the radiation sources 30 in the bottom row. Because these radiation sources are in a lower position relative to the primary mirror 22, the light rays that are emitted by these radiation sources hit the primary mirror 22 in positions where the slope of the primary mirror is steeper, and none of them reaches the secondary mirror 24 so that no caustic is formed. Further, because of the smaller curvature of the primary mirror 22 in its lower part, the focal length is larger, so that the radiation is distributed over a larger irradiated region r. Some light rays can hit the secondary mirror 24 directly, but will be deflected so as to reach the print medium 10 only further downstream with reduced intensity.

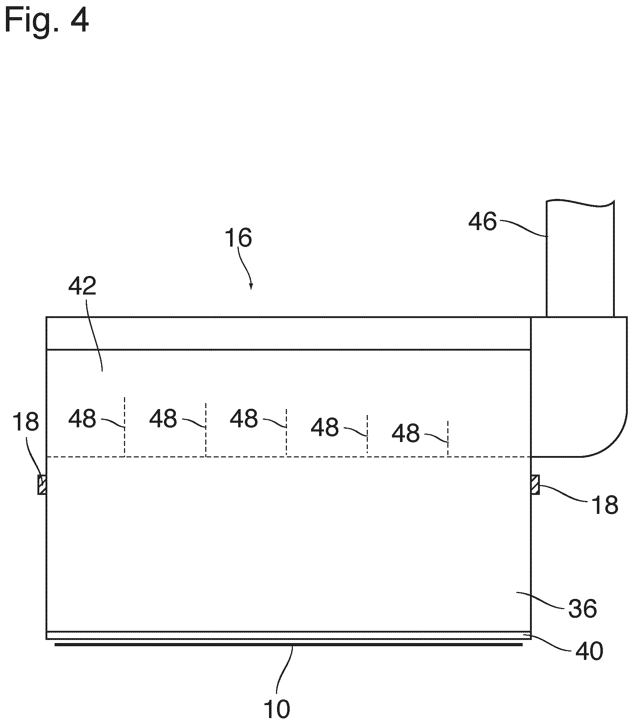

Fig. 4 is a rear view of the curing 16 unit as seen in the direction of arrows V - V in Fig. 1 and shows that the curing unit is page-wide and extends over the entire width of the media sheet 10.

The curing unit 16 comprises a plenum chamber 42 that also extends over the entire width of the media transport path and opens out into the nozzle (not shown). One end of the plenum chamber 42 is connected to a supply line 46 via which a cooling medium (ambient air or cooled air) is supplied into the plenum chamber. A number of baffles 48 divide the slot into a number of successive sections. The heights of the baffles 48 are staggered such that an essentially uniform air flow is achieved in all sections of the slot and, accordingly, on the entire width of the nozzle (not shown).

## Claims

1. A printer having a curing unit (16) that is movable relative to a print medium (10) on which an image has been printed, the curing unit (16) comprising at least one radiation source (26, 28, 30) for irradiating the print medium (10) with curing radiation, and a nozzle (38) for blowing a gaseous medium against the print medium (10), **characterized in that** the nozzle (38) is constituted by a bar member (34) that extends across the print medium (10) and is integrated with a mirror (22, 24) for deflecting the curing radiation onto the print medium (10).

2. The printer according to claim 1, wherein the gaseous medium is a gaseous cooling medium.

3. The printer according to claim 1 or 2, comprising an optical system (22, 24) for concentrating the curing radiation onto a surface portion of the print medium (10), the optical system (22, 24) is arranged to create, on the surface of the print medium (10), an intensity profile (I₁; Iₜₒₜ).

4. The printer according to claim 3, comprising a plurality of radiation sources (26, 28, 30) configured to emit radiation of different types, wherein the optical system (22, 24) is configured to create different intensity profiles (I₁- I₃) for the different types of radiation.

5. The printer according to claim 4, wherein the radiation sources (26, 28, 30) are UV-radiation sources emitting light with different wavelengths.

6. The printer according to any of the claims 3-5, wherein the optical system (22, 24) comprises a curved mirror (22).

7. The printer according to claim 6, wherein the curved mirror (22) delimits a tapering part of the nozzle (38).

8. The printer according to claim 6, wherein the radiation sources (26, 28, 30) for different types of radiation are arranged to emit their radiation onto parts of the curved mirror (22) that have difference curvatures.

9. The printer according to claim 6, wherein the bar member (34) comprises a secondary mirror (24) for deflecting part of the radiation that has been deflected by the curved mirror (22), the secondary mirror (24) deflecting the radiation onto a part of the print medium (10) that is also irradiated by radiation that has been deflected only at the curved mirror (22).

10. The printer according to any of the preceding claims, wherein the curing unit (16) is arranged to be moved relative to the print medium (10) at constant speed.

11. The printer according to claim 10, having a printhead (12) that is arranged to move relative to the print medium (10) in a main scanning direction, the printer further being arranged to move the print medium (10) step-wise in a sub-scanning direction (A) normal to the main scanning direction, and the curing unit (16) is arranged for reciprocating movement in a direction parallel to the sub-scanning direction (A).
